# EUROPEAN PATENT APPLICATION

(11) **EP 4 830 803 A1**
(43) Date of publication of application: **28.10.2026**
(21) Application number: 24906297.7
(22) Date of filing: 16.12.2024
(51) Int. Cl.: A63F 13/55

(54) **VIRTUAL OBJECT INTERACTION METHOD AND APPARATUS, AND DEVICE AND MEDIUM**

(30) Priority: 19.12.2023 CN 202311755405
(71) Applicant: Beijing Zitiao Network Technology Co., Ltd., Beijing 100190 (CN)
(72) Inventor: LIU, Mengqian, Beijing 100028 (CN); FANG, Chi, Beijing 100028 (CN); GUO, Jia, Beijing 100028 (CN); LIU, Chin-Wei, Beijing 100028 (CN); LIU, Shuo, Beijing 100028 (CN); MU, Rongxuan, Beijing 100028 (CN)
(74) Representative: Grünecker Patent- und Rechtsanwälte PartG mbB
(86) International application number: PCT/CN2024/139617
(87) International publication number: WO 2025/130816

(57) **Abstract**

Provided in the present application are a virtual object interaction method and apparatus, and a device and a medium. The method comprises: displaying on a display component a three-dimensional environment generated by a computer; presenting a first virtual object in the three-dimensional environment; displaying a second virtual object between the first virtual object and a user; detecting first input information of the user by means of an input device, and displaying operation prompt information corresponding to the second virtual object; and detecting second input information of the user by means of the input device, and when the second input information meets a preset condition, changing the operation prompt information, such that the operation prompt information corresponds to the first virtual object.

## Description

### CROSS-REFERENCE TO RELATED APPLICATION(S)

The present application is based on and claims priority to Chinese Application No. 202311755405.1, filed on December 19, 2023, which is incorporated herein by reference in its entirety.

### TECHNICAL FIELD

Embodiments of the present application relate to the technical field of human-computer interaction, and in particular, to a virtual object interaction method, apparatus, device, and medium.

### BACKGROUND

With the widespread use of extended reality (Extended Reality, XR) technology, users may enter different virtual spaces and interact with virtual objects in the virtual spaces by using XR devices.

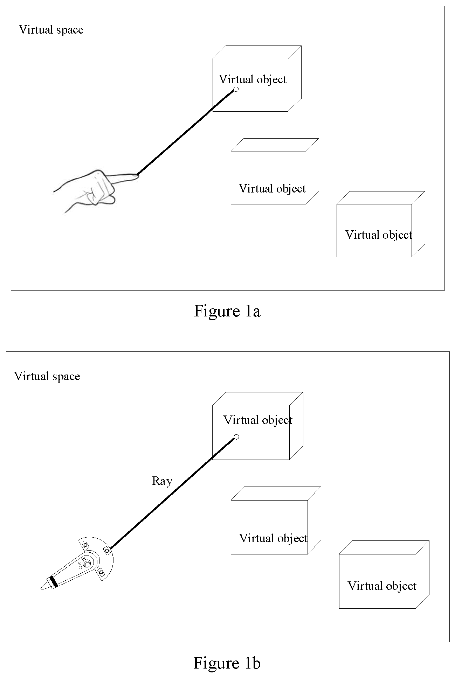

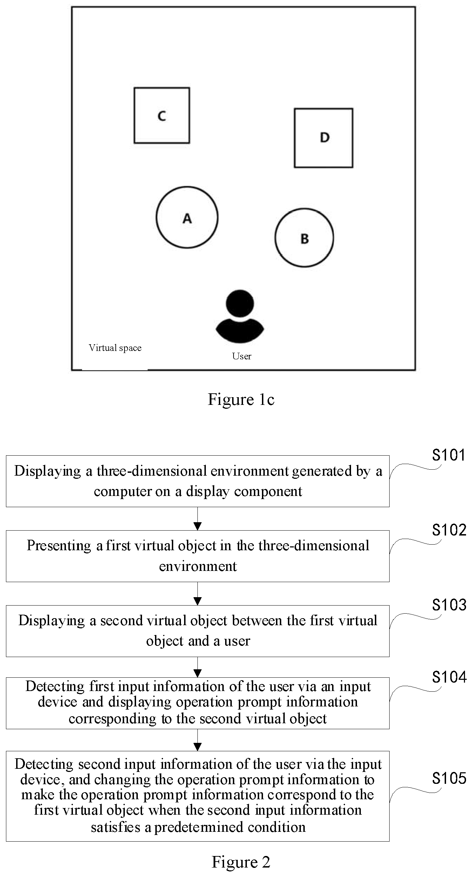

At present, when interacting with a virtual object in a virtual space, a user usually uses controller interaction as shown in Fig. 1a or gesture interaction as shown in Fig. 1b to select a target virtual object, and interacts with the target virtual object. However, when there is an occlusion relationship between a plurality of virtual objects in the virtual space in the user's field of view, for example, as shown in Fig. 1c, a virtual object C is occluded by a virtual object A, and a virtual object D is occluded by a virtual object B, the user may only interact with an unoccluded virtual object but cannot interact with an occluded virtual object by using the gesture interaction or the controller interaction, resulting in a poor interaction experience of the user with the virtual object.

### SUMMARY

The present application provides a virtual object interaction method, apparatus, device, and medium, such that a user may interact with an occluded virtual object, thereby increasing interaction interest and interaction diversity between the user and the virtual object, and improving the interaction experience of the user with the virtual object.

In a first aspect, an embodiment of the present application provides a virtual object interaction method, which is applied to an electronic device, where the electronic device comprises a display component and one or more input devices, and the method comprises:
displaying a three-dimensional environment generated by a computer on the display component;
presenting a first virtual object in the three-dimensional environment;
displaying a second virtual object between the first virtual object and a user;
detecting first input information of the user via the input device, and displaying operation prompt information corresponding to the second virtual object; and
detecting second input information of the user via the input device, and changing the operation prompt information to make the operation prompt information correspond to the first virtual object when the second input information satisfies a predetermined condition.

In a second aspect, an embodiment of the present application provides a virtual object interaction apparatus, which is configured on an electronic device, where the electronic device comprises a display component and one or more input devices, and the apparatus comprises:
a display module, configured to display a three-dimensional environment generated by a computer on the display component; present a first virtual object in the three-dimensional environment; display a second virtual object between the first virtual object and a user; and detect first input information of the user via the input device and display operation prompt information corresponding to the second virtual object; and
a changing module, configured to detect second input information of the user via the input device, and change the operation prompt information to make the operation prompt information correspond to the first virtual object when the second input information satisfies a predetermined condition.

In a third aspect, an embodiment of the present application provides an electronic device, comprising:
a processor and a memory, where the memory is configured to store computer programs, and the processor is configured to call and run the computer program stored in the memory to perform the virtual object interaction method according to the embodiment of the first aspect or various implementations thereof.

In a fourth aspect, an embodiment of the present application provides a computer-readable storage medium, which is configured to store computer programs , where the computer program causes a computer to perform the virtual object interaction method according to the embodiment of the first aspect or various implementations thereof.

In a fifth aspect, an embodiment of the present application provides a computer program product including program instructions, where when the program instructions are run on an electronic device, the electronic device is caused to perform the virtual object interaction method according to the embodiment of the first aspect or various implementations thereof.

According to the technical solutions disclosed in the embodiments of the present application, a three-dimensional environment generated by a computer is displayed on a display component of an electronic device, a first virtual object is presented in the three-dimensional environment, and a second virtual object is displayed between the first virtual object and a user. First input information of the user is detected via an input device, and operation prompt information corresponding to the second virtual object is displayed. Second input information of the user is detected via the input device, and the operation prompt information is changed to make the operation prompt information correspond to the first virtual object when the second input information satisfies a predetermined condition, such that the user may interact with an occluded virtual object.

### BRIEF DESCRIPTION OF THE DRAWINGS

In order to more clearly illustrate the technical solutions in the embodiments of the present application, the following will briefly introduce the drawings that need to be used in the description of the embodiments. Obviously, the drawings in the following description are only some embodiments of the present application. For those of ordinary skill in the art, other drawings may be obtained based on these drawings without creative efforts.
Fig. 1a is a schematic diagram of interacting with any virtual object in a virtual space by using a controller interaction method in the related art;
Fig. 1b is a schematic diagram of interacting with any virtual object in a virtual space by using a gesture interaction method in the related art;
Fig. 1c is a top view of a virtual object C being occluded by a virtual object A and a virtual object D being occluded by a virtual object B in a virtual space;
Fig. 2 is a schematic flowchart of a virtual object interaction method according to an embodiment of the present application;
Fig. 3 is a schematic flowchart of another virtual object interaction method according to an embodiment of the present application;
Fig. 4a is a side view of a first virtual object partially occluding a second virtual object according to an embodiment of the present application;
Fig. 4b is a side view of a first virtual object completely occluding a second virtual object according to an embodiment of the present application;
Fig. 5a is a schematic diagram of a ray separation mode according to an embodiment of the present application;
Fig. 5b is a schematic diagram of a ray splitting mode according to an embodiment of the present application;
Fig. 6 is a schematic diagram of outputting prompt information according to an embodiment of the present application;
Fig. 7 is a schematic diagram after adjusting presentation form of virtual objects with an occlusion relationship according to an embodiment of the present application;
Fig. 8 is a schematic flowchart of another virtual object interaction method according to an embodiment of the present application;
Fig. 9 is a schematic diagram of a user interacting with any virtual object by using a multimodal interaction manner according to an embodiment of the present application;
Fig. 10 is a schematic flowchart of another virtual object interaction method according to an embodiment of the present application;
Fig. 11 is a schematic block diagram of a virtual object interaction apparatus according to an embodiment of the present application; and
Fig. 12 is a schematic block diagram of an electronic device according to an embodiment of the present application.

### DETAILED DESCRIPTION OF EMBODIMENTS

The following will clearly and completely describe the technical solutions in the embodiments of the present application with reference to the drawings in the embodiments of the present application. Obviously, the described embodiments are only some of the embodiments of the present application, not all of them. All other embodiments obtained by persons of ordinary skill in the art based on the embodiments in the present application without creative efforts fall within the protection scope of the present application.

It should be noted that the terms "first" and "second" in the description, claims and drawings of the present application are used to distinguish similar objects, but do not necessarily mean a specific order or sequence. It should be understood that the data so used may be interchanged under appropriate circumstances so that the embodiments of the present application described herein may be implemented in orders other than those illustrated or described herein. In addition, the terms "include" and "have" and any of their variations are intended to cover non-exclusive inclusion. For example, a process, method, system, product or server that includes a series of steps or units does not necessarily have to be limited to those steps or units that are clearly listed, but may include other steps or units that are not clearly listed or are inherent to these processes, methods, products or devices.

In the embodiments of the present application, words such as "exemplary" or "for example" are used as examples, illustrations or explanations. Any embodiment or solution described as "exemplary" or "for example" in the embodiments of the present application should not be interpreted as more preferred or more advantageous than other embodiments or solutions. Rather, the use of words such as "exemplary" or "for example" is intended to present related concepts in a specific manner.

In the description of the embodiments of the present application, unless otherwise stated, "a plurality of" refers to two or more, that is, at least two. "At least one" refers to one or more.

In order to facilitate the understanding of the embodiments of the present application, before describing each embodiment of the present application, some concepts involved in all the embodiments of the present application will be appropriately explained first, as follows:
1) Virtual reality (abbreviated as VR), a technology for creating and experiencing a virtual world, determines to generate a virtual environment, which is a multi-source information (the virtual reality mentioned herein includes at least visual perception, and may also include auditory perception, tactile perception, motion perception, and even taste perception, smell perception, etc.), realizes the simulation of a fused, interactive three-dimensional dynamic vision and entity behaviors of the virtual environment, enabling users to be immersed in the simulated virtual reality environment and realizing the application of various virtual environments such as maps, games, videos, education, medical treatment, simulation, collaborative training, sales, assisted manufacturing, maintenance and repair, etc.
2) Virtual reality device (VR device), a terminal that realizes a virtual reality effect, which may usually be provided in a form of glasses, a head-mounted display (abbreviated as HMD), and contact lenses for realizing visual perception and other forms of perception. Certainly, the form of the virtual reality device is not limited to this, and it may be further miniaturized or enlarged according to actual needs.

Optionally, the virtual reality devices described in the embodiments of the present application may include, but are not limited to, the following types:
2.1) a personal computer virtual reality (PCVR) device, which uses a PC to perform related calculations and data output for a virtual reality function, and an external PC virtual reality device uses the data output by the PC to achieve the effect of virtual reality.
2.2) a mobile virtual reality device, which supports setting a mobile terminal (such as a smart phone) in various ways (such as a head-mounted display with a dedicated card slot), and is connected to the mobile terminal in a wired or wireless manner. The mobile terminal performs related calculations of the virtual reality function and outputs data to the mobile virtual reality device, such as watching a virtual reality video through an APP on the mobile terminal.
2.3) an all-in-one virtual reality device, which has a processor for performing related calculations of the virtual function, and thus has an independent virtual reality input and output function, and does not need to be connected to a PC or a mobile terminal, and has a high degree of freedom in use.
3) Augmented Reality (AR): a technology of calculating, in real time, camera attitude parameters of a camera in the real world (or referred to as a three-dimensional world, a reality world) in an image collection process of the camera, and adding virtual elements to an image collected by the camera according to the camera attitude parameters. The virtual elements include but are not limited to images, videos and three-dimensional models. The target of the AR technology is to superimpose the virtual world on the reality world on a screen for interaction.
4) Mixed Reality (MR): a simulated setting that integrates computer-created sensory inputs (for example, virtual objects) with sensory inputs from a physical setting or representations thereof. In some MR settings, the computer-created sensory inputs may adapt to changes in the sensory inputs from the physical setting. In addition, some electronic systems for presenting MR settings may monitor orientation and/or position relative to the physical setting, to enable virtual objects to interact with real objects (that is, physical elements from the physical setting or representations thereof). For example, the system may monitor motion so that a virtual plant appears to be stationary relative to a physical building.
5) Extended Reality (XR) refers to all real and virtual combined environments and human-computer interactions generated by computer technologies and wearable devices, which includes various forms such as virtual reality (VR), augmented reality (AR), and mixed reality (MR).
6) Virtual scene, a virtual scene displayed (or provided) when an application is running on an electronic device. The virtual scene may be a simulation environment of the real world, a semi-simulated and semi-fictional virtual scene, or a purely fictional virtual scene. The virtual scene may be any one of a two-dimensional virtual scene, a 2.5-dimensional virtual scene or a three-dimensional virtual scene, and the dimension of the virtual scene is not limited in the embodiments of the present application. For example, the virtual scene may include a sky, a land, an ocean, etc., and the land may include environmental elements such as a desert and a city, and a user may control a virtual object to move in the virtual scene. It should be understood that the above virtual scene may also be referred to as a virtual space.
7) Virtual object, an object that interacts in the virtual scene, and is capable of being stationary, moving and performing various behaviors in the virtual scene as controlled by a user or a robot program (for example, a robot program based on artificial intelligence), such as various characters in a game, etc.

Considering that when interacting with a virtual object presented in a virtual space, a user usually uses controller interaction or gesture interaction to select a target virtual object, and performs various interactions with the target virtual object. When there is an occlusion relationship between a plurality of virtual objects in the virtual space in the user's field of view, the user may only interact with an unoccluded virtual object but cannot interact with an occluded virtual object by using the gesture interaction or the controller interaction, resulting in a poor interaction experience of the user with the virtual object.

In order to solve the above technical problem, the inventive concept of the present application is: when the user interacts with virtual objects with an occlusion relationship in the virtual space, detecting, by an input device, whether input information of the user satisfies a predetermined condition, and changing operation prompt information displayed at a second virtual object when the predetermined condition is satisfied, to make the operation prompt information correspond to a first virtual object, such that the user may interact with the occluded virtual object, thereby improving the interaction experience of the user with the virtual object.

The technical solutions of the present application will be described in detail below through some embodiments. The embodiments described below may be combined with each other, and the same or similar concepts or processes may not be repeated in some embodiments.

Fig. 2 is a schematic flowchart of a virtual object interaction method according to an embodiment of the present application. The virtual object interaction method provided by the embodiment of the present application may be performed by a virtual object interaction apparatus. The virtual object interaction apparatus may be composed of hardware and/or software, and may be integrated in an electronic device. In the present application, the electronic device is various terminal devices including a display component and one or more input devices, such as a VR device, an MR device or an XR device, etc. It should be understood that the above electronic device may also be called user device or user apparatus, etc., and the electronic device is not limited here. In order to facilitate the description of the technical solutions provided by the present application, the electronic device being an XR device will be taken as an example for detailed description below.

As shown in Fig. 2, the method includes the following steps.

S101, displaying a three-dimensional environment generated by a computer on a display component.

In the present application, a display is provided in the display component, and the display is configured to receive three-dimensional environment data generated by a computer, to display a virtual three-dimensional environment for a user based on the three-dimensional environment data.

The above display may be a single display or two displays. That is, one display may be provided for both eyes of the user, or one display may be provided for each of the left eye and the right eye of the user, which is not limited in the present application.

The three-dimensional environment data generated by the computer may be a virtual three-dimensional environment simulated and generated by the computer.

In addition, the virtual three-dimensional environment displayed to the user through the display in the display component may be understood as a virtual scene or a virtual space.

S102, presenting a first virtual object in the three-dimensional environment.

S103, displaying a second virtual object between the first virtual object and the user.

In order to facilitate the user to interact with the three-dimensional environment displayed by the XR device, in the present application, at least one virtual object is provided in the three-dimensional environment displayed by the display component in the XR device, such that the user may interact with the three-dimensional environment based on the virtual object. In the present application, the virtual object presented in the three-dimensional environment may be, but is not limited to, a virtual character, a virtual panel, a virtual interface, a virtual control, or a virtual icon, etc.

The first virtual object and the second virtual object may be two different virtual objects of the same type or two different virtual objects of different types, which is not limited in the present application.

Optionally, when there are a plurality of virtual objects in the three-dimensional environment, it is possible that one virtual object is occluded by another virtual object. That is, when the second virtual object is displayed between the user and the first virtual object, the second virtual object occludes the first virtual object, as shown in Fig. 1c.

S104, detecting first input information of the user via an input device, and displaying operation prompt information corresponding to the second virtual object.

In the present application, the input device may be at least one external device communicatively connected to the XR device, such as a handle, a mouse, a touchpad, and a microphone, or may be at least one sensor on the XR device, such as a sight tracking camera for tracking a sight of the user, a gesture acquisition camera for acquiring a gesture of the user, and an inertial measurement unit (IMU) for acquiring head pose data of the user.

Correspondingly, each of the above input devices may correspond to one interaction manner, for example, the handle corresponds to a handle interaction manner, the microphone corresponds to a voice interaction manner, the sight tracking camera corresponds to an eye movement interaction manner, the IMU corresponds to a head interaction manner, and the gesture acquisition camera corresponds to a gesture interaction manner, and the like.

That is, the user may perform various interactions with the virtual object in the three-dimensional scene by means of the input device.

Generally, when the user needs to interact with any virtual object in the three-dimensional environment, the user may send first input information of interacting with the virtual object to the XR device by means of any of the above input devices, to cause the XR device to display corresponding operation prompt information on the virtual object based on the first input information, and then the user is reminded by the operation prompt information that the user may interact with the virtual object. The operation prompt information may be an operation prompt text or visual indication information, as long as it may play a prompt role. The specific presentation form of the operation prompt information is not limited in the present application.

However, when the second virtual object is displayed in front of the first virtual object displayed in the three-dimensional environment, that is, when the first virtual object is occluded by the second virtual object, if the user wants to interact with the first virtual object by means of any input device, the user may only interact with the second virtual object located in front of the first virtual object based on the first input information, that is, only the operation prompt information corresponding to the second virtual object may be displayed, so that the purpose of the user interacting with the first virtual object cannot be achieved.

S105, detecting second input information of the user via the input device, and changing the operation prompt information to make the operation prompt information correspond to the first virtual object when the second input information satisfies a predetermined condition.

In order to be able to normally interact with the occluded first virtual object, the user may adjust an interaction manner, and send second input information of interacting with the first virtual object to the XR device based on the adjusted interaction manner. Further, when the XR device determines that the second input information of the user satisfies the predetermined condition of interacting with the first virtual object, the operation prompt information corresponding to the second virtual object may be changed to display the operation prompt information corresponding to the first virtual object, so that the user may perform various interactions with the occluded first virtual object based on the operation prompt information corresponding to the first virtual object.

In the present application, the second input information refers to information different from the first input information, such as new first input information obtained by adjusting the first input information, or input information different from the first input information is added on the basis of the first input information, or input information different from the first input information is added on the basis of the new first input information, which is not limited in the present application.

In addition, the above predetermined condition is related to an interaction intention of the user, that is, the predetermined condition may be flexibly set based on the interaction intention of the user. For example, when the interaction intention of the user is that the user needs to interact with the first virtual object, the predetermined condition is set based on the intention that the user needs to interact with the first virtual object, such as an interaction score between the user and the first virtual object is greater than an interaction score between the user and the second virtual object, etc. The setting of the predetermined condition is not limited in the present application.

It may be understood that in the present application, when there are mutually occluded virtual objects in the three-dimensional environment presented to the user, if the user needs to interact with an occluded virtual object, the input information that may interact with an unoccluded virtual object is adjusted, to interact with the occluded virtual object based on the adjusted input information, such that the user may interact with the occluded virtual object, and the interaction experience of the user with the virtual object is improved.

According to the technical solutions disclosed in the embodiments of the present application, a three-dimensional environment generated by a computer is displayed on a display component of an electronic device, a first virtual object is presented in the three-dimensional environment, and a second virtual object is displayed between the first virtual object and a user. First input information of the user is detected via an input device, and operation prompt information corresponding to the second virtual object is displayed. Second input information of the user is detected via the input device, and the operation prompt information is changed to make the operation prompt information correspond to the first virtual object when the second input information satisfies a predetermined condition, such that the user may interact with the occluded virtual object, thereby increasing interaction interest and interaction diversity between the user and the virtual object, and improving the interaction experience of the user with the virtual object.

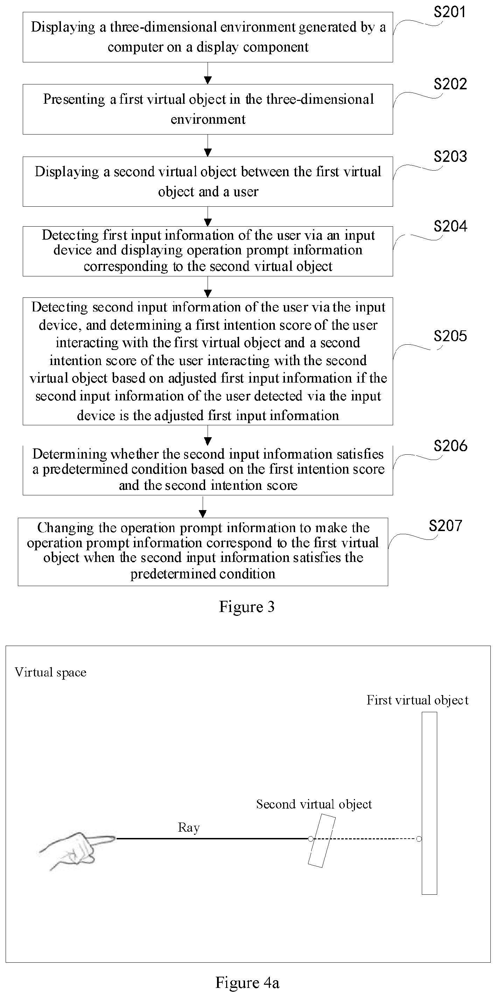

On the basis of the foregoing embodiments, considering that the second input information of the user may be the adjusted first input information; or, input information different from the first input information is added on the basis of the first input information; or, input information different from the first input information is added on the basis of the adjusted first input information. Therefore, with reference to Fig. 3 below, the second input information of the user being the adjusted first input information, and the process of interacting with the first virtual object based on the adjusted first input information will be specifically described.

As shown in Fig. 3, the method may include the following steps:
S201, displaying a three-dimensional environment generated by a computer on a display component.
S202, presenting a first virtual object in the three-dimensional environment.
S203, displaying a second virtual object between the first virtual object and a user.
S204, detecting first input information of the user via an input device, and displaying operation prompt information corresponding to the second virtual object.
S205, detecting second input information of the user via the input device, and determining a first intention score of the user interacting with the first virtual object and a second intention score of the user interacting with the second virtual object based on adjusted first input information if the second input information of the user detected via the input device is the adjusted first input information.

In the present application, the adjusted first input information may be understood as new first input information obtained by changing the first input information. Exemplarily, assuming that the first input information is that the user emits an interaction ray to any virtual object at position 1 through the input device, i.e. the handle, the adjusted first input information may be that the user moves the handle from position 1 to position 2, and emits an interaction ray to the virtual object at position 2.

In some optional embodiments, the input device on the XR device detects in real time whether there is input information from the user. When an input operation for input information of the user is detected, the input information of the user is acquired, and the input information of the user is sent to a processing module of the XR device, so that the processing module compares the latest acquired input information (the second input information) with the previously acquired input information (the first input information), to determine whether the latest acquired input information is consistent with the previously acquired input information. If the input device determines that the latest acquired input information and the previously acquired input information are two different pieces of input information in the same interaction manner, it is determined that the latest acquired input information is the adjusted first input information. At this time, the XR device may determine the first intention score of the user interacting with the first virtual object and the second intention score of the user interacting with the second virtual object based on the adjusted first input information.

In the present application, determining the first intention score of the user interacting with the first virtual object and the second intention score of the user interacting with the second virtual object based on the adjusted first input information may include the following implementation manners.

The first implementation manner may include the following steps.

Step 11, determining a first distance between visual indication information corresponding to the first virtual object and a center point position of the first virtual object, and a second distance between visual indication information corresponding to the second virtual object and a center point position of the second virtual object.

Step 12, determining the first intention score based on the first distance, and determining the second intention score based on the second distance.

The above visual indication information is the operation prompt information. In the present application, the visual indication information may be understood as information that may be recognized by the eyes of the user, optionally as graphics with different color attributes, and/or graphics with different transmission frequency attributes, such as cursors of different colors or cursors of different flashing frequencies, which is not limited in the present application. The shape of the cursor may be circular, cross-shaped or hand-shaped, etc.

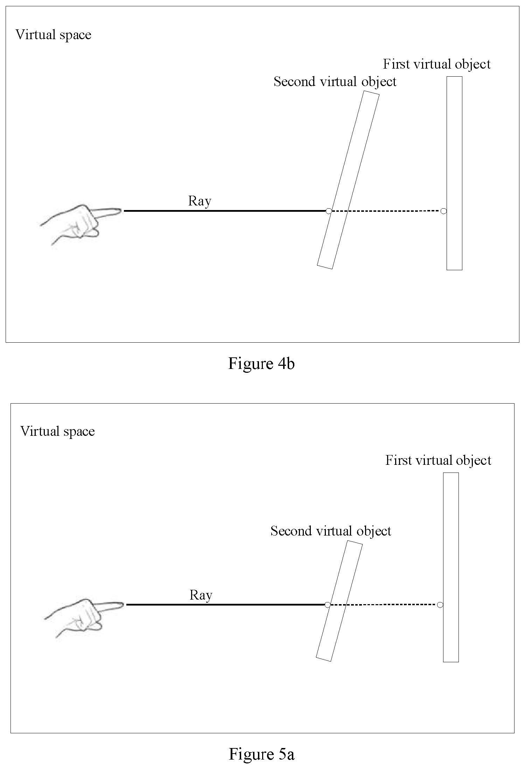

Considering that the occlusion relationship between virtual objects in the three-dimensional environment includes partial occlusion and complete occlusion. The partial occlusion should be understood as that the second virtual object occludes a small area of the first virtual object, as shown in Fig. 4a; the complete occlusion should be understood as that the second virtual object occludes most of the area of the first virtual object or even almost completely occludes the first virtual object, as shown in Fig. 4b.

Then, when the user interacts with virtual objects with an occlusion relationship by means of a handle or gestures, the visual indication information of a ray emitted by the handle or the gestures and projected onto the virtual objects with the occlusion relationship may include the following two cases.

Case 1: when it is determined that the second virtual object partially occludes the first virtual object, a ray separation mode is used to project the ray emitted by the handle or the gestures onto the first virtual object and the second virtual object, as shown in Fig. 5a.

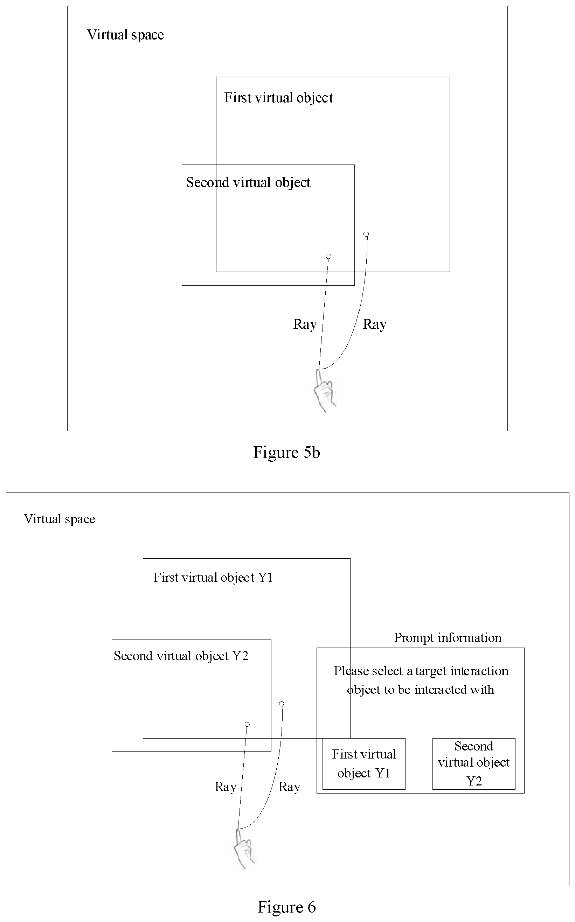

Case 2: when it is determined that the second virtual object completely occludes the first virtual object, a ray splitting mode is used to project the ray emitted by the handle or the gestures onto the first virtual object and the second virtual object, as shown in Fig. 5b.

Whether the second virtual object partially occludes the first virtual object or completely occludes the first virtual object may be determined by the XR device acquiring display areas of the first virtual object and the second virtual object displayed in the three-dimensional environment, and determining an occlusion relationship between the first virtual object and the second virtual object based on the display areas. The specific implementation process may be found in related technologies, and will not be repeated here.

Considering that the user projects a ray into the three-dimensional environment through an interaction manner such as a handle, the ray will intersect with the first virtual object and the second virtual object with an occlusion relationship, and each intersection point will display a piece of visual indication information on a corresponding virtual object. Therefore, in the present application, the positions of the intersections of the ray with the first virtual object and the second virtual object may be acquired, and the positions of the intersections may be determined as the positions of the sight indication information.

Further, a first distance between the center point position of the first virtual object and the position of the visual indication information corresponding to the first virtual object is determined, and a second distance between the center point position of the second virtual object and the position of the visual indication information corresponding to the second virtual object is determined. Then, the first distance is determined as the first intention score of the user interacting with the first virtual object, and the second distance is determined as the second intention score of the user interacting with the second virtual object.

Determining the first distance between the center point position of the first virtual object and the position of the visual indication information corresponding to the first virtual object, and determining the second distance between the center point position of the second virtual object and the position of the visual indication information corresponding to the second virtual object, specifically, are determining the distance between the center point position of the virtual object and the center point position of the visual indication information, and the above first distance and the above second distance may be calculated by using a two-point distance calculation formula.

The second implementation manner may include the following steps.

Step 21, determining a display position of operation prompt information corresponding to the adjusted first input information.

Step 22, determining the first intention score and the second intention score based on the display position of the operation prompt information.

When the first virtual object is occluded by the second virtual object in the three-dimensional environment, the user cannot directly interact with the occluded first virtual object in any interaction manner. At this time, the user may move his/her own position or use other ways to get around the second virtual object, so that the user may see the first virtual object to be interacted with. Then, the second input information (the adjusted first input information) of interacting with the first virtual object is sent to the XR device through any interaction manner, to cause the XR device to display the operation prompt information corresponding to the first virtual object based on the second input information.

That is, when the first virtual object that the user wants to interact with is occluded by the second virtual object, the user gets around the second virtual object by moving or other means, to see the first virtual object, and then directly interacts with the first virtual object.

After getting around the second virtual object, the user may directly see the first virtual object, and the operation prompt information corresponding to the adjusted first input information may be directly displayed on the first virtual object, but not on the second virtual object. Therefore, in the present application, the first intention score and the second intention score may be determined based on the display position of the operation prompt information corresponding to the adjusted first input information.

In some embodiments, when the operation prompt information corresponding to the adjusted first input information is located on the first virtual object, it may be determined that the first intention score corresponding to the first virtual object is 1, and no operation prompt information is displayed on the second virtual object, then it may be determined that the first intention score corresponding to the second virtual object is 0.

S206, determining whether the second input information satisfies the predetermined condition based on the first intention score and the second intention score, if yes, executing S207, otherwise, executing displaying the operation prompt information corresponding to the second virtual object.

In some optional embodiments, the first intention score and the second intention score may be compared. When the first intention score is greater than the second intention score, it indicates that the condition of the user interacting with the first virtual object is satisfied, and at this time, it is determined that the second input information satisfies the predetermined condition; when the first intention score is less than or equal to the second intention score, it indicates that the condition of the user interacting with the first virtual object is not satisfied, and at this time, it is determined that the second input information does not satisfy the predetermined condition.

That is, in the present application, the predetermined condition is determined based on the virtual object that the user actually needs to interact with. For example, when the user wants to interact with the occluded first virtual object, the predetermined condition is set as that the input information of the user satisfies a rule of the user interacting with the first virtual object.

In some optional embodiments, in order to help the user to interact with the first virtual object to be interacted with, in the present application, when it is determined that the first intention score is equal to the second intention score, prompt information may also be output to the user, to enable the user to independently select a target interaction object to be interacted with from the first virtual object and the second virtual object based on the prompt information.

In the present application, the prompt information may be in the form of voice and/or text, etc. When the prompt information is text prompt information, the prompt information may be displayed in an area near the first virtual object and/or the second virtual object, or a blank area in the three-dimensional scene.

Exemplarily, as shown in Fig. 6, assuming that the first intention score corresponding to the first virtual object Y1 is equal to the second intention score corresponding to the second virtual object Y2, a text prompt floating window of "Please select a target interaction object to be interacted with" is displayed near the first virtual object Y1, and the floating window also includes a first virtual object Y1 control and a second virtual object Y2 control, so that the user may select the first virtual object Y1 control to select the target interaction object.

S207, changing the operation prompt information to make the operation prompt information correspond to the first virtual object when the second input information satisfies the predetermined condition.

Optionally, the operation prompt information corresponding to the first virtual object may be adjusted from a first presentation form to a second presentation form, to enable the user to determine that the first virtual object has been selected based on the adjusted operation prompt information, and then perform various interactions with the first virtual object.

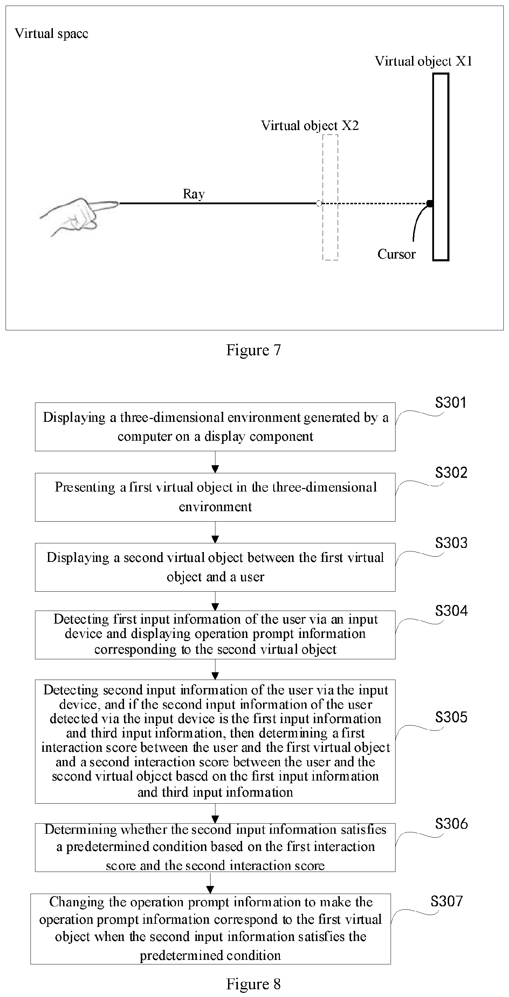

Exemplarily, assuming that there is an occlusion relationship between the virtual object X1 and the virtual object X2, and the virtual object X1 is partially occluded by the virtual object X2, when it is determined that the virtual object X1 is the object to be interacted with that the user wants to interact with, the virtual object X1 and the cursor on the virtual object X1 may be highlighted, and the virtual object X2 and the cursor on the virtual object X2 are blurred, as shown in Fig. 7. Alternatively, the virtual object X1 and the cursor on the virtual object X1 may be highlighted, the virtual object X2 may be blurred, and no cursor is displayed on the virtual object X2, so that the user may intuitively see that the virtual object X1 is the object to be interacted with, and thus interacts with the virtual object X1. It should be understood that the above cursor is a form of expression that the operation prompt information is visual indication information.

According to the technical solutions disclosed in the embodiments of the present application, a three-dimensional environment generated by a computer is displayed on a display component of an electronic device, a first virtual object is presented in the three-dimensional environment, and a second virtual object is displayed between the first virtual object and a user. First input information of the user is detected via an input device, and operation prompt information corresponding to the second virtual object is displayed. Second input information of the user is detected via the input device, and the operation prompt information is changed to make the operation prompt information correspond to the first virtual object when the second input information satisfies a predetermined condition, such that the user may interact with the occluded virtual object, thereby increasing interaction interest and interaction diversity between the user and the virtual object, and improving the interaction experience of the user with the virtual object.

With reference to Fig. 8 below, in the case where the second input information of the user is the first input information to which input information different from the first input information is added, the process of interacting with the first virtual object based on the second input information will be specifically described.

As shown in Fig. 8, the method may include the following steps.

S301, displaying a three-dimensional environment generated by a computer on a display component.

S302, presenting a first virtual object in the three-dimensional environment.

S303, displaying a second virtual object between the first virtual object and a user.

S304, detecting first input information of the user via an input device, and displaying operation prompt information corresponding to the second virtual object.

S305, detecting second input information of the user via the input device, and if the second input information of the user detected via the input device is the first input information and third input information, then determining a first interaction score between the user and the first virtual object and a second interaction score between the user and the second virtual object based on the first input information and the third input information.

In the present application, the third input information is different in type from the first input information. For example, if the type of the first input information is a ray emitted by a handle, the third input information may be a sight of the user corresponding to an eye tracking interaction method of the user. For another example, if the type of the first input information is gesture interaction, the third input information may be a head interaction method of the user, etc.

In some optional embodiments, considering that there are a variety of manners to interact with the virtual object, when the user interacts with the occluded first virtual object, a variety of interaction manners may also be superimposed to send the second input information to the XR device, so as to achieve the purpose that the user may interact with the first virtual object without moving or using other ways to get around the second virtual object occluding the first virtual object when the first virtual object is occluded by the second virtual object, thereby improving the interaction experience of the user with the virtual object.

As an optional implementation manner, the input device on the XR device may detect in real time whether there is input information from the user. When an input operation of the user with input information is detected, the input information of the user is acquired, and the input information is sent to the processing module of the XR device, so that the processing module compares the latest acquired input information (the second input information) with the previously acquired input information (the first input information), to determine whether the latest acquired input information is consistent with the previously acquired input information. If the input device determines that the latest acquired input information includes the same input information as the previously acquired input information and input information in other interaction manners is also added, it is determined that the latest acquired input information is the first input information + the third input information. At this time, the XR device may determine a first interaction score between the user and the first virtual object and a second interaction score between the user and the second virtual object based on the first input information and the third input information.

In some optional embodiments, determining, based on the first input information and the third input information, the first interaction score between the user and the first virtual object and the second interaction score between the user and the second virtual object in the present application may include the following steps.

Step 31, determining a first input information weight value, a third input information weight value, a first virtual object weight value and a second virtual object weight value.

In the present application, a weight value of each virtual object and a weight value of an interaction manner corresponding to each input information may be configured in the XR device in advance. The weight value of each interaction manner may be understood as the weight value of the input information corresponding to each interaction manner.

In addition, the weight value of the virtual object may be flexibly set according to attributes of the virtual object. The attributes of the virtual object in the present application may include, but are not limited to, a display position of the virtual object, content of the virtual object itself and practicability of the virtual object.

The weight value of the interaction manner may be flexibly set according to a priority or the attributes of the interaction manner, which is not limited in the present application.

In addition, in order to meet requirements of different application scenarios, different weight values may be set for the first virtual object, the second virtual object and each interaction manner for an application attribute of each application scenario, and the weight values also support an update operation.

For example, when the application scenario is a live streaming scenario, and the interaction manners include gesture interaction, eye tracking interaction, voice interaction and head interaction, a weight value of 1 may be set for the first virtual object, a weight value of 0.5 may be set for the second virtual object, and the following weight values are set for the respective interaction manners: a gesture interaction weight value of 1, a voice interaction weight value of 0.8, an eye tracking interaction weight value of 0.6, and a head interaction weight value of 0.4 in the live streaming scenario. For another example, when the application scenario is an office scenario, and the interaction manners include handle interaction, eye tracking interaction, voice interaction and head interaction, a weight value of 1 may be set for the first virtual object, a weight value of 0.8 may be set for the second virtual object, and the following weight values are set for the respective interaction manners: an eye tracking interaction weight value of 1, a handle interaction weight value of 0.9, a head interaction weight value of 0.8, and a voice interaction weight value of 0.7, and the like in the office scenario.

That is to say, when acquiring the first virtual object weight value, the second virtual object weight value, the first input information weight value and the third input information weight value, in the present application, a content scenario type presented by the three-dimensional environment is first determined, and then each virtual object weight value corresponding to the scenario type, the weight value of the interaction manner corresponding to the first input information and the weight value of the interaction manner corresponding to the third input information are acquired from a pre-configured weight value list according to the scenario type.

Step 32, determining the first interaction score based on the first input information weight value, the third input information weight value and the first virtual object weight value.

Step 33, determining the second interaction score based on the first input information weight value, the third input information weight value and the second virtual object weight value.

After acquiring the first input information weight value, the third input information weight value, the first virtual object weight value and the second virtual object weight value, in the present application, the first interaction score between the user and the first virtual object may be calculated based on the first input information weight value, the third input information weight value and the first virtual object weight value, and the second interaction score between the user and the second virtual object may be calculated based on the first input information weight value, the third input information weight value and the second virtual object weight value.

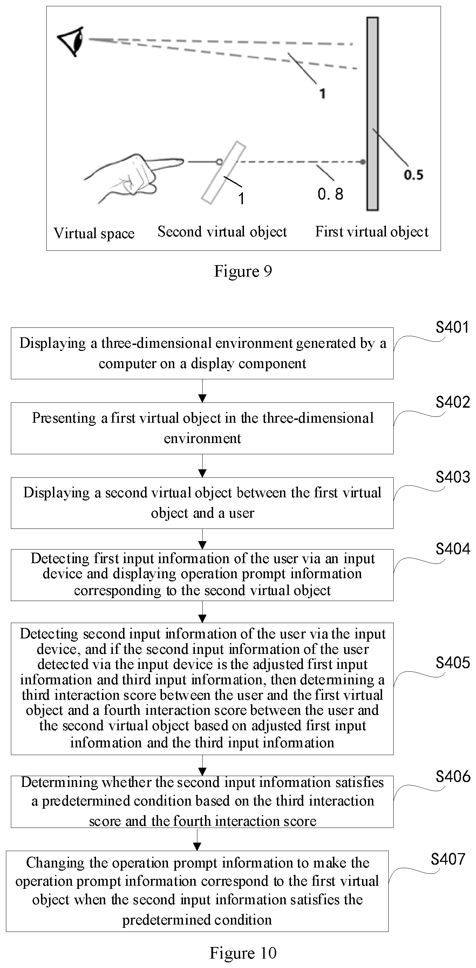

Exemplarily, as shown in Fig. 9, assuming that interaction manners corresponding to the second input information for the first virtual object include eye tracking interaction and gesture interaction, and the interaction manner corresponding to the second input information for the second virtual object includes gesture interaction, when the first virtual object weight value is 0.5, the second virtual object weight value is 1, the eye tracking interaction weight value is 1, and the gesture interaction weight value is 0.8, the first interaction score corresponding to the first virtual object is calculated as: (1*0.5)+(1*1)+(1*0.8)=2.3, and the second interaction score corresponding to the second virtual object is calculated as: (1*1)+(1*0.8)=1.8.

In some optional embodiments, considering that the signal energy of the ray corresponding to the handle interaction or the gesture interaction may be lost with the increase of the distance in the transmission process, in the present application, different weight values may also be set for rays of different distances based on the ray transmission distance. For example, the weight value of the ray intersecting with a close virtual object is 1, and the weight value of the ray intersecting with a far virtual object is 0.5.

Furthermore, when calculating the first interaction score corresponding to the first virtual object and the second interaction score corresponding to the second virtual object, the weight value of the ray may also be considered, so that the accuracy and reliability of the user selecting the first virtual object as the target interaction object from the virtual objects with an occlusion relationship may be further improved.

It should be noted that the execution sequence of the above step 32 and step 33 may be as follows: step 32 may be executed first and then step 33 is executed, or step 33 is executed first and then step 32 is executed, or step 32 and step 33 are executed synchronously. The execution sequence of the above step 32 and step 33 is not limited in the present application.

S306, determining whether the second input information satisfies the predetermined condition based on the first interaction score and the second interaction score, if yes, executing S307, otherwise, executing displaying the operation prompt information corresponding to the second virtual object.

In some optional embodiments, the first interaction score and the second interaction score may be compared. When the first interaction score is greater than the second interaction score, it indicates that the condition of the user interacting with the first virtual object is satisfied, and at this time, it is determined that the second input information satisfies the predetermined condition; when the first interaction score is less than or equal to the second interaction score, it indicates that the condition of the user interacting with the first virtual object is not satisfied, and at this time, it is determined that the second input information does not satisfy the predetermined condition.

S307, changing the operation prompt information to make the operation prompt information correspond to the first virtual object when the second input information satisfies the predetermined condition.

According to the technical solutions disclosed in the embodiments of the present application, a three-dimensional environment generated by a computer is displayed on a display component of an electronic device, a first virtual object is presented in the three-dimensional environment, and a second virtual object is displayed between the first virtual object and a user. First input information of the user is detected via an input device, and operation prompt information corresponding to the second virtual object is displayed. Second input information of the user is detected via the input device, and the operation prompt information is changed to make the operation prompt information correspond to the first virtual object when the second input information satisfies a predetermined condition, such that the user may interact with the occluded virtual object, thereby increasing interaction interest and interaction diversity between the user and the virtual object, and improving the interaction experience of the user with the virtual object. In addition, in the present application, other interaction manners are added on the basis of a single-modal interaction manner, so as to provide a multimodal interaction manner to guide the user to interact with the occluded virtual object, which meets the use requirement of the user directly interacting with the occluded virtual object.

With reference to Fig. 10 below, in the case where the second input information of the user is the adjusted first input information to which input information different from the first input information is added, the process of interacting with the first virtual object based on the second input information will be specifically described.

As shown in Fig. 10, the method may include the following steps.

S401, displaying a three-dimensional environment generated by a computer on a display component.

S402, presenting a first virtual object in the three-dimensional environment.

S403, displaying a second virtual object between the first virtual object and a user.

S404, detecting first input information of the user via an input device, and displaying operation prompt information corresponding to the second virtual object.

S405, detecting second input information of the user via the input device, and determining a third interaction score between the user and the first virtual object and a fourth interaction score between the user and the second virtual object based on adjusted first input information and third input information if the second input information of the user detected via the input device is the adjusted first input information and the third input information.

In some optional embodiments, the input device on the XR device may detect in real time whether there is input information from the user. When an input operation of the user with input information is detected, the input information of the user is acquired, and the input information is sent to the processing module of the XR device, so that the processing module compares the latest acquired input information (the second input information) with the previously acquired input information (the first input information), to determine whether the latest acquired input information is consistent with the previously acquired input information. If the input device determines that the latest acquired input information includes the adjusted first input information and input information in other interaction manners is also added, it is determined that the latest acquired input information is the adjusted first input information + the third input information. At this time, the XR device may determine the third interaction score between the user and the first virtual object and the fourth interaction score between the user and the second virtual object based on the adjusted first input information and the third input information.

In some optional embodiments, determining, based on the adjusted first input information and the third input information, the third interaction score between the user and the first virtual object and the fourth interaction score between the user and the second virtual object in the present application may include the following steps.

Step 41, determining an adjusted first input information weight value, a third input information weight value, a first virtual object weight value and a second virtual object weight value;

Step 42, determining the third interaction score based on the first input information weight value, the third input information weight value and the first virtual object weight value.

Step 43, determining the second interaction score based on the first input information weight value, the third input information weight value and the second virtual object weight value.

The implementation principles of step 41 to step 43 are the same or similar to those of step 31 to step 33 in the foregoing embodiments. For the specific implementation process, reference may be made to the foregoing embodiments, which is not limited here.

S406, determining whether the second input information satisfies the predetermined condition based on the third interaction score and the fourth interaction score, if yes, executing S407, otherwise, executing displaying the operation prompt information corresponding to the second virtual object.

In some optional embodiments, the third interaction score and the fourth interaction score may be compared. When the third interaction score is greater than the fourth interaction score, it indicates that the condition of the user interacting with the first virtual object is satisfied, and at this time, it is determined that the second input information satisfies the predetermined condition; when the third interaction score is less than or equal to the fourth interaction score, it indicates that the condition of the user interacting with the first virtual object is not satisfied, and at this time, it is determined that the second input information does not satisfy the predetermined condition.

S407, changing the operation prompt information to make the operation prompt information correspond to the first virtual object when the second input information satisfies the predetermined condition.

According to the technical solutions disclosed in the embodiments of the present application, a three-dimensional environment generated by a computer is displayed on a display component of an electronic device, a first virtual object is presented in the three-dimensional environment, and a second virtual object is displayed between the first virtual object and a user. First input information of the user is detected via an input device, and operation prompt information corresponding to the second virtual object is displayed. Second input information of the user is detected via the input device, and the operation prompt information is changed to make the operation prompt information correspond to the first virtual object when the second input information satisfies a predetermined condition, such that the user may interact with the occluded virtual object, thereby increasing interaction interest and interaction diversity between the user and the virtual object, and improving the interaction experience of the user with the virtual object. In addition, in the present application, other interaction manners are added on the basis of a single-modal interaction manner, so as to provide a multimodal interaction manner to guide the user to interact with the occluded virtual object, which meets the use requirement of the user directly interacting with the occluded virtual object.

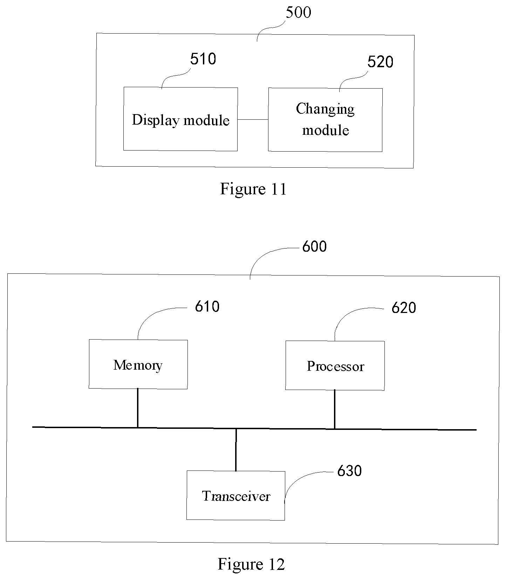

A virtual object interaction apparatus according to an embodiment of the present application will be described below with reference to Fig. 11. Fig. 11 is a schematic block diagram of a virtual object interaction apparatus according to an embodiment of the present application. In the present application, the virtual object interaction apparatus is configured on an electronic device, and the electronic device includes a display component and one or more input devices.

As shown in Fig. 11, the virtual object interaction apparatus 500 includes a display module 510 and a changing module 520.

The display module 510 is configured to display a three-dimensional environment generated by a computer on the display component; present a first virtual object in the three-dimensional environment; display a second virtual object between the first virtual object and a user; and detect first input information of the user via the input device and display operation prompt information corresponding to the second virtual object.

The changing module 520 is configured to detect second input information of the user via the input device, and change the operation prompt information to make the operation prompt information correspond to the first virtual object when the second input information satisfies a predetermined condition.

In an optional implementation manner of the embodiment of the present application, the second input information comprises:
adjusted first input information; or,
the first input information and third input information; or,
the adjusted first input information and the third input information;
wherein the third input information is different in type from the first input information.

In an optional implementation manner of the embodiment of the present application, the predetermined condition is related to an interaction intention of the user.

In an optional implementation manner of the embodiment of the present application, the changing module 502 includes:
a first determination unit, configured to determine a first intention score of the user interacting with the first virtual object and a second intention score of the user interacting with the second virtual object based on adjusted first input information if the second input information of the user detected via the input device is the adjusted first input information;
a second determination unit, configured to determine whether the second input information satisfies the predetermined condition based on the first intention score and the second intention score; and
a changing unit, configured to change the operation prompt information when the second input information satisfies the predetermined condition.

In an optional implementation manner of the embodiment of the present application, when the operation prompt information is visual indication information, the first determination unit is specifically configured to: determine a first distance between visual indication information corresponding to the first virtual object and a center point position of the first virtual object, and a second distance between visual indication information corresponding to the second virtual object and a center point position of the second virtual object; and determine the first intention score based on the first distance, and determine the second intention score based on the second distance.

In an optional implementation manner of the embodiment of the present application, when the operation prompt information is visual indication information, the first determination unit is specifically configured to: determine a display position of the operation prompt information corresponding to the adjusted first input information; and determine the first intention score and the second intention score based on the display position of the operation prompt information.

In an optional implementation manner of the embodiment of the present application, the second determination unit is specifically configured to: determine that the second input information satisfies the predetermined condition when the first intention score is greater than the second intention score; and determine that the second input information does not satisfy the predetermined condition when the first intention score is less than or equal to the second intention score.

In an optional implementation manner of the embodiment of the present application, the changing unit is specifically configured to adjust operation prompt information corresponding to the first virtual object from a first presentation form to a second presentation form.

In an optional implementation manner of the embodiment of the present application, the first determination unit is further configured to determine a first interaction score between the user and the first virtual object and a second interaction score between the user and the second virtual object based on the first input information and third input information if the second input information of the user detected via the input device is the first input information and the third input information;
the second determination unit is further configured to determine whether the second input information satisfies the predetermined condition based on the first interaction score and the second interaction score; and
the changing unit is further configured to change the operation prompt information when the second input information satisfies the predetermined condition.

In an optional implementation manner of the embodiment of the present application, the first determination unit is further configured to determine a first input information weight value, a third input information weight value, a first virtual object weight value and a second virtual object weight value; determine the first interaction score based on the first input information weight value, the third input information weight value and the first virtual object weight value; and determine the second interaction score based on the first input information weight value, the third input information weight value and the second virtual object weight value.

In an optional implementation manner of the embodiment of the present application, the second determination unit is further configured to: determine that the second input information satisfies the predetermined condition when the first interaction score is greater than the second interaction score; and determine that the second input information does not satisfy the predetermined condition when the first interaction score is less than or equal to the second interaction score.

In an optional implementation manner of the embodiment of the present application, the first determination unit is further configured to determine a third interaction score between the user and the first virtual object and a fourth interaction score between the user and the second virtual object based on the adjusted first input information and the third input information if the second input information of the user detected via the input device is the adjusted first input information and the third input information;
the second determination unit is further configured to determine whether the second input information satisfies the predetermined condition based on the third interaction score and the fourth interaction score; and
the changing unit is further configured to change the operation prompt information when the second input information satisfies the predetermined condition.

It should be understood that the apparatus embodiment may correspond to the foregoing method embodiment. For similar descriptions, reference may be made to the method embodiment. To avoid repetitions, details are not described herein again. Specifically, the apparatus 500 shown in Fig. 11 may perform the method embodiment corresponding to Fig. 2, and the foregoing and other operations and/or functions of each module in the apparatus 500 are respectively intended to implement corresponding procedures of each method in Fig. 2, which are not described herein again for the sake of brevity.

The apparatus 500 of the embodiment of the present application is described above with reference to the drawings from the perspective of the functional module. It should be understood that the functional module may be implemented in the form of hardware, or may be implemented by instructions in the form of software, or may be implemented by a combination of hardware and software modules. Specifically, the steps in the method embodiment of the first aspect in the embodiments of the present application may be completed by a hardware integrated logic circuit in a processor and/or the instructions in the form of the software. The steps of the method of the first aspect disclosed in the embodiments of the present application may be directly embodied to be completed by a hardware decoding processor or by a combination of hardware in the decoding processor and software modules. Optionally, the software module may be located in a mature storage medium in the art, such as a random access memory, a flash memory, a read-only memory, a programmable read-only memory, an electrically erasable programmable memory, or a register. The storage medium is located in a memory. The processor reads information in the memory, and completes the steps in the foregoing method embodiment of the first aspect in combination with its hardware.

Fig. 12 is a schematic block diagram of an electronic device according to an embodiment of the present application. As shown in Fig. 12, the electronic device 600 may include:
a memory 610 and a processor 620, where the memory 610 is configured to store a computer program, and transmit the program codes to the processor 620. In other words, the processor 620 may call and run the computer program from the memory 610 to implement the virtual object interaction method in the embodiments of the present application.

For example, the processor 620 may be configured to perform the foregoing virtual object interaction method embodiment according to instructions in the computer program.

In some embodiments of the present application, the processor 320 may include, but is not limited to:
a general-purpose processor, a digital signal processor (DSP), an application specific integrated circuit (ASIC), a field programmable gate array (FPGA) or other programmable logic devices, a discrete gate or transistor logic device, a discrete hardware component, and the like.

In some embodiments of the present application, the memory 610 includes, but is not limited to:
a volatile memory and/or a non-volatile memory. The non-volatile memory may be a read-only memory (ROM), a programmable read-only memory (PROM), an erasable programmable read-only memory (EPROM), an electrically erasable programmable read-only memory (EEPROM) or a flash memory. The volatile memory may be a random access memory (RAM), which is used as an external cache. By way of exemplary but not restrictive description, many forms of RAMs may be used, such as a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synch link dynamic random access memory (SLDRAM), and a direct rambus random access memory (DR RAM).

In some embodiments of the present application, the computer program may be divided into one or more modules, and the one or more modules are stored in the memory 610 and executed by the processor 620 to implement the virtual object interaction method provided by the present application. The one or more modules may be a series of computer program instruction segments capable of implementing specific functions, and the instruction segments are used to describe the execution process of the computer program in the electronic device.

As shown in Fig. 12, the electronic device 600 may further include:
a transceiver 630, which may be connected to the processor 620 or the memory 610.

The processor 620 may control the transceiver 630 to communicate with other devices, specifically to send information or data to other devices or to receive information or data sent by other devices. The transceiver 630 may include a transmitter and a receiver. The transceiver 630 may further include an antenna, and the number of the antenna may be one or more.

It should be understood that the components of the electronic device are connected to each other through a bus system. In addition to a data bus, the bus system further includes a power bus, a control bus and a status signal bus.

The present application further provides a computer storage medium having a computer program stored thereon, where the computer program, when executed by a computer, causes the computer to perform the virtual object interaction method of the foregoing method embodiment.

An embodiment of the present application further provides a computer program product including program instructions, where when the program instructions are run on the electronic device, the electronic device is caused to perform the virtual object interaction method of the foregoing method embodiment.

When implemented in software, it may be implemented entirely or partially in the form of a computer program product. The computer program product includes one or more computer instructions. When the computer program instructions are loaded and executed on a computer, the procedures or functions according to the embodiments of the present application are all or partially generated. The computer may be a general-purpose computer, a dedicated computer, a computer network, or other programmable apparatus. The computer instructions may be stored in a computer-readable storage medium or may be transmitted from one computer-readable storage medium to another computer-readable storage medium. For example, the computer instructions may be transmitted from one website, computer, server or data center to another website, computer, server or data center in a wired (for example, a coaxial cable, an optical fiber, a digital subscriber line (DSL)) or wireless (for example, infrared, wireless, microwave, etc.) manner. The computer-readable storage medium may be any usable medium accessible by a computer, or a data storage device, such as a server or a data center, integrating one or more usable media. The usable medium may be a magnetic medium (for example, a floppy disk, a hard disk, a magnetic tape), an optical medium (for example, a digital video disc (DVD)), a semiconductor medium (for example, a solid state disk (SSD)), etc.

Those of ordinary skill in the art may realize that the modules and algorithm steps of various examples described in conjunction with the embodiments disclosed herein may be implemented in electronic hardware or a combination of computer software and electronic hardware. Whether these functions are performed in hardware or software depends on the specific application and design constraints of the technical solution. A person skilled in the art may implement the described functions by using different methods for each particular application, but such implementation should not be considered as going beyond the scope of the present application.

In the several embodiments provided by the present application, it should be understood that the disclosed system, apparatus and method may be implemented in other manners. For example, the apparatus embodiments described above are merely exemplary. For example, the module division is merely logical function division and may be divided by other ways in the actual implementation. For example, the various modules or components may be combined or integrated in another system or certain features may be omitted, or not implemented. In addition, the coupling, direct coupling or communication connection shown or discussed may be through certain interfaces, and the indirect coupling or communication connection between the devices and the modules may be in electrical, mechanical or other forms.

The modules described as separate parts may or may not be physically separate, and parts displayed as modules may or may not be physical modules, that is, they may be located in one place or distributed to a plurality of network units. Some or all of the modules may be selected according to actual needs to realize the purpose of the solutions of the embodiments. For example, the functional modules in each embodiment of the present application may be integrated into one processing module, each module may be physically separate, or two or more modules may be integrated into one module.

In the embodiments of the present application, the term "module" or "unit" refers to a computer program or a part of a computer program with a predetermined function, and works with other related parts to achieve a predetermined goal, and may be implemented in whole or in part by using software, hardware (such as a processing circuit or a memory), or a combination thereof. Similarly, one processor (or a plurality of processors or memories) may be used to implement one or more modules or units. Furthermore, each module or unit may be a part of an overall module or unit that contains the functions of the module or unit.

The above description is only a specific implementation of the present application, but the scope of protection of the present application is not limited thereto. Any variation or replacement readily figured out by a person skilled in the art within the technical scope disclosed in the present application shall fall within the scope of protection of the present application. Therefore, the scope of protection of the present application shall be subject to the scope of protection of the claims.

## Claims

1. A virtual object interaction method, applied to an electronic device, wherein the electronic device comprises a display component and one or more input devices, and the method comprises:
displaying a three-dimensional environment generated by a computer on the display component;
presenting a first virtual object in the three-dimensional environment;
displaying a second virtual object between the first virtual object and a user;
detecting first input information of the user via the input device, and displaying operation prompt information corresponding to the second virtual object; and
detecting second input information of the user via the input device, and changing the operation prompt information to make the operation prompt information correspond to the first virtual object when the second input information satisfies a predetermined condition.

2. The method of claim 1, wherein the second input information comprises:
adjusted first input information; or,
the first input information and third input information; or,
the adjusted first input information and the third input information;
wherein the third input information is different in type from the first input information.

3. The method of claim 2, wherein the predetermined condition is related to an interaction intention of the user.

4. The method of claim 3, wherein the detecting the second input information of the user via the input device, and changing the operation prompt information when the second input information satisfies the predetermined condition comprises:
in response to the second input information of the user detected via the input device being the adjusted first input information, determining a first intention score of the user interacting with the first virtual object and a second intention score of the user interacting with the second virtual object based on the adjusted first input information;
determining whether the second input information satisfies the predetermined condition based on the first intention score and the second intention score; and
changing the operation prompt information when the second input information satisfies the predetermined condition.

5. The method of claim 4, wherein when the operation prompt information is visual indication information, the determining the first intention score of the user interacting with the first virtual object and the second intention score of the user interacting with the second virtual object based on the adjusted first input information comprises:
determining a first distance between the visual indication information corresponding to the first virtual object and a center point position of the first virtual object, and a second distance between the visual indication information corresponding to the second virtual object and a center point position of the second virtual object; and
determining the first intention score based on the first distance, and determining the second intention score based on the second distance.

6. The method of claim 4, wherein when the operation prompt information is visual indication information, the determining the first intention score of the user interacting with the first virtual object and the second intention score of the user interacting with the second virtual object based on the adjusted first input information comprises:
determining a display position of the operation prompt information corresponding to the adjusted first input information; and
determining the first intention score and the second intention score based on the display position of the operation prompt information.

7. The method of any of claims 4 to 6, wherein the determining whether the second input information satisfies the predetermined condition based on the first intention score and the second intention score comprises:
determining that the second input information satisfies the predetermined condition when the first intention score is greater than the second intention score; and
determining that the second input information does not satisfy the predetermined condition when the first intention score is less than or equal to the second intention score.

8. The method of any of claims 4 to 7, wherein the changing the operation prompt information when the second input information satisfies the predetermined condition comprises:
adjusting the operation prompt information corresponding to the first virtual object from a first presentation form to a second presentation form.

9. The method of claim 3, wherein the detecting second input information of the user via the input device, and changing the operation prompt information when the second input information satisfies the predetermined condition comprises:
in response to the second input information of the user detected via the input device being the first input information and third input information, determining a first interaction score between the user and the first virtual object and a second interaction score between the user and the second virtual object based on the first input information and the third input information;
determining whether the second input information satisfies the predetermined condition based on the first interaction score and the second interaction score; and
changing the operation prompt information when the second input information satisfies the predetermined condition.

10. The method of claim 9, wherein the determining the first interaction score between the user and the first virtual object and the second interaction score between the user and the second virtual object based on the first input information and third input information comprises:
determining a first input information weight value, a third input information weight value, a first virtual object weight value and a second virtual object weight value;
determining the first interaction score based on the first input information weight value, the third input information weight value and the first virtual object weight value; and
determining the second interaction score based on the first input information weight value, the third input information weight value and the second virtual object weight value.

11. The method of claim 9 or 10, wherein the determining whether the second input information satisfies the predetermined condition based on the first interaction score and the second interaction score comprises:
determining that the second input information satisfies the predetermined condition when the first interaction score is greater than the second interaction score; and
determining that the second input information does not satisfy the predetermined condition when the first interaction score is less than or equal to the second interaction score.

12. The method of claim 3, wherein the detecting the second input information of the user via the input device, and changing the operation prompt information when the second input information satisfies the predetermined condition comprises:
in response to the second input information of the user detected via the input device being the adjusted first input information and the third input information, determining a third interaction score between the user and the first virtual object and a fourth interaction score between the user and the second virtual object based on the adjusted first input information and the third input information;
determining whether the second input information satisfies the predetermined condition based on the third interaction score and the fourth interaction score; and
changing the operation prompt information when the second input information satisfies the predetermined condition.

13. A virtual object interaction apparatus, configured on an electronic device, wherein the electronic device comprises a display component and one or more input devices, and the apparatus comprises:
a display module, configured to display a three-dimensional environment generated by a computer on the display component; present a first virtual object in the three-dimensional environment; display a second virtual object between the first virtual object and a user; and detect first input information of the user via the input device and display operation prompt information corresponding to the second virtual object; and
a changing module, configured to detect second input information of the user via the input device, and change the operation prompt information to make the operation prompt information correspond to the first virtual object when the second input information satisfies a predetermined condition.

14. An electronic device, comprising:
a processor and a memory, wherein the memory is configured to store a computer program, and the processor is configured to call and run the computer program stored in the memory to perform the virtual object interaction method of any of claims 1 to 12.

15. A computer-readable storage medium, which is configured to store a computer program, wherein the computer program causes a computer to perform the virtual object interaction method of any of claims 1 to 12.

16. A computer program, wherein the computer program causes a computer to perform the virtual object interaction method of any of claims 1 to 12.
